Europäisches Patentamt

European Patent Office

Office européen des brevets

(19)

(11) Veröffentlichungsnummer: **0 633 172 A1**

(12) **EUROPÄISCHE PATENTANMELDUNG**

(21) Anmeldenummer: **94105937.0**

(22) Anmeldetag: **16.04.94**

(51) Int. Cl.6: **B60T 8/26**, B60T 8/24

(30) Priorität: **09.07.93 DE 4322911**

(43) Veröffentlichungstag der Anmeldung:
**11.01.95 Patentblatt 95/02**

(84) Benannte Vertragsstaaten:
**DE ES FR GB IT**

(71) Anmelder: **V O L K S W A G E N
Aktiengesellschaft
Postfach
D-38436 Wolfsburg (DE)**

(72) Erfinder: **Totschnig, Manfred
Dannenbütteler Weg 43e
D-38518 Gifhorn (DE)**

(54) **Umschaltbarer trägheitsgesteuerter Bremsdruckregler für hydraulische
Kraftfahrzeug-Bremsanlagen.**

(57) Die Erfindung bezieht sich auf einen umschaltbaren trägheitsgesteuerten Bremsdruckregler (1) für hydrauli-sche Kraftfahrzeug-Bremsanlagen, mit einer vorzugsweise kugelförmigen Trägheitsmasse (2), durch deren beim Bremsen des Fahrzeugs trägheitsbedingte Verlagerung entlang einer vorzugsweise etwas ansteigenden Bewegungsbahn ein vom Bremsdruckregler-Eingang (4) zu einem Bremsdruckregler-Ausgang (5) führender Leitungsabschnitt bei Überschreiten einer definierten Trägheitskraft - direkt oder indirekt - unterbrechbar ist, wobei auf die Trägheitsmasse (2) zusätzlich einwirkende Mittel vorgesehen sind, die in Abhängigkeit von Betriebsparame-tern, z. B. in Abhängigkeit davon, ob ein Antiblockier-Regelsystem (ABS) i. O. oder nicht i. O. ist oder in Abhängigkeit davon, ob ein solches Antiblockier-Regelsystem gerade regelt oder nicht regelt, ein- und ausschalt-bar sind. Die auf die Trägheitsmasse (2) zusätzlich einwirkenden Mittel sind als rein elektro-magnetisch ein- und ausschaltbare Mittel, vorzugsweise als elektro-magnetisch angetriebener Stößel (6.1) oder als durch seine Magnetkraft,wirkender ein- und ausschaltbarer Elektromagnet (6.2) ausgebildet, wobei durch das Ein- oder durch das Ausschalten der Mittel die zum Unterbrechen des Leitungsabschnitts zu überwindende Trägheitskraft der Trägheitsmasse (2) von einem definierten ersten Wert ($P_{u1}$) auf einen definierten höheren zweiten Wert ($P_{u2}$) umschaltbar ist.

FIG 1

EP 0 633 172 A1

Die Erfindung betrifft einen umschaltbaren trägheitsgesteuerten Bremsdruckregler für hydraulische Kraftfahrzeug-Bremsanlagen der im Oberbegriff des Patentanspruchs 1 genannten Art.

Ein derartiger Bremsdruckregler ist beispielsweise aus der DE-29 18 772-C2 bekannt, wo er in einer blockiergeschützten, d. h. in einer mit einem Antiblockierregelsystem ausgerüsteten mehrkreisigen hydraulischen Bremsanlage in den zu den Hinterradbremsen führenden Bremsleitungen angeordnet ist.

Bremsdruckregler in Form von Bremsdruckminderern oder auch Bremsdruckbegrenzern werden in üblichen hydraulischen Kfz-Bremsanlagen eingesetzt, um sicherzustellen, daß es auch beim Aufbringen höherer Bremspedalkräfte und einer entsprechend höheren Fahrzeugverzögerung in Folge der damit zwangsläufig verbundenen stärkeren Radlaständerung an der Hinterachse (Entlastung) nicht zu einem frühzeitigen Blockieren der gebremsten Hinterräder kommt, was mit einem Verlust der Fahrstabilität verbunden wäre.

Bei Kraftfahrzeugen mit einer blockiergeschützten hydraulischen Bremsanlage könnte an sich - vielleicht mit Ausnahme von Fahrzeugen mit einer extremen Achslastverteilung Vorderachse/Hinterachse - grundsätzlich auf den Einsatz solcher Bremsdruckregler in den Hinterradbremsleitungen verzichtet werden, da durch das Antiblockierregelsystem (ABS) ja ein Blockieren der Fahrzeugräder verhindert wird. Je nach Bauart der eingesetzten Bremsdruckregler, nämlich ob druck-, verzögerungs- oder lastabhängig gesteuert, hätten diese im Prinzip sogar einen mehr oder weniger starken negativen Einfluß auf die Abbremsung des Fahrzeugs, da sie den Bremsdruck der Hinterradbremsen ja bei überschreiten ihres einkonstruierten Ansprech- bzw. Umschaltpunkts begrenzen bzw. reduzieren, wodurch der jeweils vorherrschende Haftwert nicht immer voll zur Abbremsung des Fahrzeugs ausgenutzt und somit der jeweils an sich physikalisch erreichbare kürzestmögliche Bremsweg nicht erzielt werden kann.

Bei einer Störung im bzw. bei einem Ausfall des Antiblockierregelsystems wäre die erforderliche Fahr- bzw. Bremsstabilität eines solchen Fahrzeugs ohne Bremsdruckregler in den Hinterradbremsleitungen jedoch nicht mehr gewährleistet, da die Hinterräder bei stärkerer Betätigung des Bremspedals sehr schnell überbremst werden könnten.

Aus dieser Erkenntnis heraus ist es i. a. üblich geworden, auch bei blockiergeschützten (ABS) hydraulischen Bremsanlagen in den Hinterradbremsleitungen Bremsdruckregler, vorzugsweise in Form von Bremsdruckminderern einzusetzen.

Um die mit dem Einsatz solcher Bremsdruckregler in an sich blockiergeschützten Bremsanlagen verbundenen vorerwähnten Nachteile zu verringern, ist es bekannt, Bremsdruckregler einzusetzen, deren druckbegrenzende oder druckmindernde Funktion in Abhängigkeit von Betriebsparametern ein- und ausgeschaltet werden kann.

Neben Anordnungen, bei denen konventionellen Bremsdruckreglern lediglich umschaltbare Bypass-Anordnungen parallel geschaltet sind, sind auch Bremsdruckregler bekannt, die in ihrer Funktion unmittelbar umgeschaltet werden können.

Das Ein- und Ausschalten der Bremsdruckreglerfunktion erfolgt bei einigen bekannten blockiergeschützten Bremsanlagen in Abhängigkeit von der Betriebstüchtigkeit des Antiblockierregelsystems, d. h. in Abhängigkeit davon, ob dieses System funktionell in Ordnung (i. O.) ist oder aber defekt, und bei anderen blockiergeschützten Bremsanlagen in Abhängigkeit vom jeweiligen Betriebszustand des funktionsfähigen Antiblockierregelsystems, d. h. in Abhängigkeit davon, ob die Reglerfunktion des Antiblockierregelsystems gerade aktiv ist oder aber nicht.

Bei einer bekannten blockiergeschützten mehrkreisigen hydraulischen Bremsanlage (DE-29 18 772-C2) ist in den Hinterradbremsleitungen jeweils ein umschaltbarer trägheitsgesteuerter (d. h. fahrzeugverzögerungsabhängiger) Bremsdruckregler mit einer kugelförmigen Trägheitsmasse angeordnet, durch deren beim Bremsen des Fahrzeugs trägheitsbedingte Verlagerung entlang einer vorzugsweise etwas in Fahrtrichtung ansteigenden Bewegungsbahn ein vom Bremsdruckregler-Eingang zu einem Bremsdruckregler-Ausgang führender hydraulischer Leitungsabschnitt beim Überschreiten einer definierten Trägheitskraft (der Trägheitsmasse) unterbrochen wird, wodurch der hinter dem Bremsdruckregler liegende, zu den Hinterradbremsen führende Bremsleitungsabschnitt hydraulisch von dem vor dem Bremsdruckregler liegenden, vom Hauptbremszylinder kommenden Bremsleitungsteil abgetrennt ist, d. h. für die Hinterradbremsen eine Bremsdruckbegrenzung einsetzt.

Eingesetzt sind dabei umschaltbare Bremsdruckregler, deren bremsdruckbegrenzende Funktion in Abhängigkeit von bestimmten Betriebsparametern ausgeschaltet, d. h. unwirksam gemacht wird.

Zum Ein- und Ausschalten der Begrenzerfunktion des Bremsdruckreglers ist ein hydraulisch betätigter Stößel bzw. Schaltkolben vorgesehen, der zum Ausschalten der druckbegrenzenden oder druckmindernden Reglerfunktion des Bremsdruckreglers mechanisch in die Bewegungsbahn der kugelförmigen Trägheitsmasse eingeschoben wird und dadurch unabhängig von der Größe der Fahrzeugverzögerung generell verhindert, daß die gleichzeitig als Ventilglied wirkende kugelförmige Trägheitsmasse auf ihrem Ventilsitz -

2

den hydraulischen Durchlaß unterbrechen - zur Anlage kommen kann.

Der Hydraulikantrieb des Stößels bzw. des Schaltkolbens wird mittels einer elektro-magnetischen Ventilanordnung immer dann eingeschaltet und dadurch aus einer externen Druckquelle gespeist, wenn das Antiblockierregelsystem (ABS) auf Grund einer von ihm erkannten Blockiergefährdung eines oder auch mehrerer Fahrzeugräder zu regeln beginnt. Der erforderliche konstruktive Aufwand hierfür ist nicht unerheblich.

Bei einer anderen bekannten blockiergeschützten mehrkreisigen hydraulischen Bremsanlage (DE-37 42 173-A1) sind in den Hinterradbremsleitungen ebenfalls umschaltbare Bremsdruckminderer, u. a. auch verzögerungsabhängige Bremsdruckminderer angeordnet, deren Mindererfunktion normalerweise, d. h. bei intaktem Antiblockierregelsystem ausgeschaltet und nur bei Ausfall oder Störung der ABS-Anlage, d. h. des Antiblockierregelsystems eingeschaltet ist. Das Ein- und Ausschalten der Mindererfunktion wird auch hier hydraulisch, nämlich mittels eines hydraulisch angetriebenen Sperrkolbens bewirkt, was durch eine Magnetventilanordnung gesteuert wird.

Bei einer anderen vorbekannten blockiergeschützten mehrkreisigen hydraulischen Bremsanlage (DE-40 29 332-A1) sind in den Hinterradbremsleitungen umschaltbare druckabhängige Bremsdruckminderer angeordnet, deren Mindererfunktion ebenfalls normalerweise, d. h. bei intaktem Antiblockierregelsystem (ABS) ausgeschaltet und jeweils nur bei Ausfall oder Störung der ABS-Anlage eingeschaltet wird. Das Ein- und Ausschalten der Mindererfunktion des druckabhängigen Bremsdruckminderers wird mittels eines elektromagnetisch angetriebenen Betätigungsstößels bewirkt, der bei intaktem Antiblockierregelsystem räumlich eine Lage einnimmt, in der er ein Ventilglied mechanisch daran hindert, an seinem Ventilsitz zur Anlage zu gelangen. Der Erregerstrom des elektromagnetischen Antriebs des Betätigungsstößels wird dabei u. a. durch den bei Betätigung des Bremspedals schließenden üblichen Bremslichtschalter gesteuert.

Bei defekter ABS-Anlage ist der elektromagnetische Antrieb des Betätigungsstößels nicht erregt, so daß dieser unter der Wirkung einer Federvorrichtung räumlich eine Position einnimmt, bei der das Ventilglied nicht mehr daran gehindert wird, bei entsprechender Betriebssituation an seinem Ventilsitz zur Anlage zu kommen.

Bekannt sind auch trägheitsgesteuerte (verzögerungsabhängige) Bremsdruckregler, bei denen der an sich verzögerungsabhängige Umschaltpunkt des Reglers - indirekt - in Abhängigkeit von der Fahrzeugbeladung, nämlich in Abhängigkeit vom sich mit der Fahrzeugbeladung verändernden aufzubringenden Hydraulikdruck verändert wird. Bei einem bekannten trägheitsgesteuerten Bremsdruckregler dieser Art mit einer als Ventilglied wirkenden kugelförmigen Trägheitsmasse (z. B. DE-OS 1 555 435, Fig. 7) erfolgt die last- oder druckabhängige Beeinflussung des an sich verzögerungsabhängigen Umschaltpunkts des Reglers mit Hilfe eines Dauer- oder Elektromagnetens, der innerhalb des Bremsdruckreglers normalerweise räumlich derart positioniert ist, daß er keinen Einfluß auf das Bewegungsverhalten der kugelförmigen Trägheitsmasse ausübt, der aber mit steigendem Hydraulikdruck hydromechanisch, d. h. mittels eines hydraulisch angetriebenen Schwenkhebels räumlich so nahe an die aus einem ferromagnetischen Material bestehende Trägheitsmasse herangeführt wird, daß beim Verzögern des Fahrzeugs die Bewegung der kugelförmigen Trägheitsmasse (Ventilglied) gegen ihren Ventilsitz nicht nur durch die Steigung ihrer Bewegungsbahn, sondern zusätzlich auch durch die sie zurückhaltenden Magnetkräfte dieses Magnets gehemmt bzw. bestimmt wird. Der konstruktive Aufwand für diese last- bzw. druckabhängige magnetische Beeinflussung des Umschaltpunkts des an sich verzögerungsabhängigen Bremsdruckreglers ist beträchtlich.

Irgendwelche Hinweise auf eine Möglichkeit, den Umschaltpunkt dieses Bremsdruckreglers erforderlichenfalls auch in Abhängigkeit von der ordnungsgemäßen Funktion oder aber vom Regeleinsatz eines gegebenenfalls vorgesehenen Antiblockierregelsystems zu beeinflussen, sind nicht gegeben.

Vor diesem Hintergrund liegt der Erfindung die Aufgabe zugrunde, einen konstruktiv vergleichsweise einfachen umschaltbaren trägheitsgesteuerten Bremsdruckregler für hydraulische Kraftfahrzeug-Bremsanlagen der im Oberbegriff des Patentanspruchs 1 genannten Art zu schaffen, der sich steuerungstechnisch durch große Flexibilität und Anpaßbarkeit an die unterschiedlichsten Einsatzbedingungen sowie durch einen vergleichsweise geringen Energieaufwand für seine Umschaltbarkeit auszeichnet.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Anhand einiger in der Zeichnung dargestellter Ausführungsbeispiele wird die Erfindung nachstehend näher erläutert.

In der Zeichnung zeigen

Figur 1    ein erstes Ausführungsbeispiel eines erfindungsgemäßen umschaltbaren trägheitsgesteuerten Bremsdruckminderers im Längsschnitt,

Figur 2    ein zweites Ausführungsbeispiel eines solchen Bremsdruckminderers,

Figur 3       ein weiteres Ausführungsbeispiel eines erfindungsgemäßen Bremsdruckminderers und

Figur 4       in prinzipienhafter Darstellung das Kennlinienfeld eines erfindungsgemäßen umschaltbaren trägheitsgesteuerten Bremsdruckminderers.

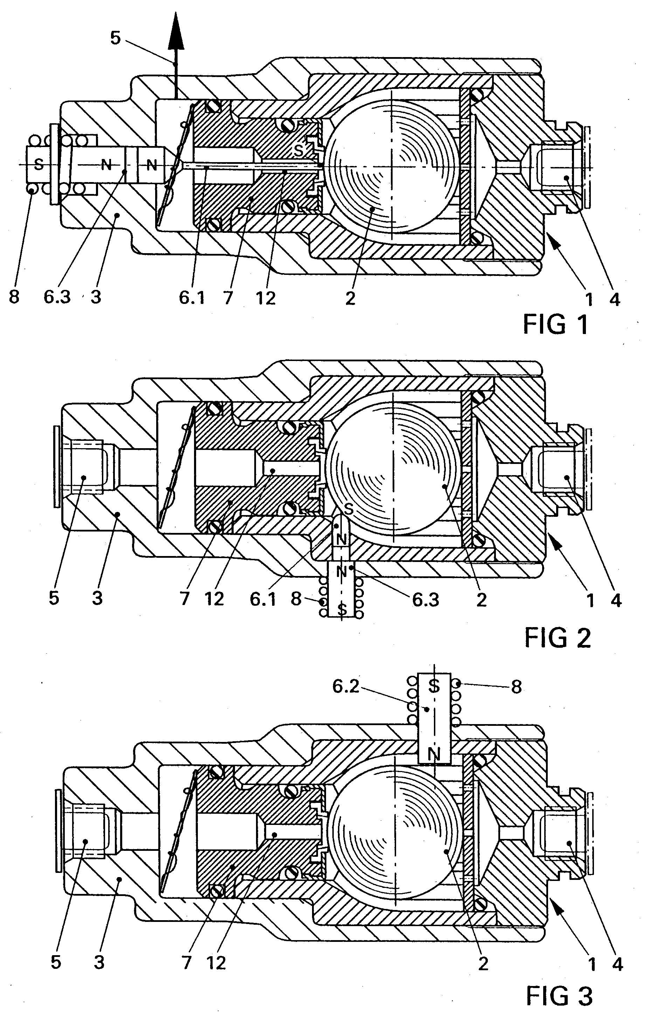

Die Figuren 1 bis 3 zeigen einen Längsschnitt durch einen bezüglich seiner meisten konstruktiven Gestaltungsmerkmale an sich bekannten trägheitsgesteuerten, d. h. fahrzeugverzögerungsabhängigen Bremsdruckreglers 1, und zwar in Form eines speziellen Bremsdruckminderers, dessen Bremsdruckregler-Eingang mit 4 und dessen Bremsdruckregler-Ausgang mit 5 beziffert sind. Im Innern des Reglergehäuses 3 sind in an sich üblicher Weise einerseits ein axial verschieblicher Differentialkolben 7 mit dem Bremsdruckregler-Eingang 4 zugewandter kleinerer Kolbenfläche dem Bremsdruckregler-Ausgang 5 zugekehrter größerer Kolbenfläche sowie andererseits eine mit diesem zusammenwirkende kugelförmige Trägheitsmasse 2 gelagert.

Die unmittelbar als Ventilglied wirkende kugelförmige Trägheitsmasse wird beim Bremsen des Fahrzeugs in üblicher Weise trägheitsbedingt entlang einer vorzugsweise etwas ansteigenden Bewegungsbahn in Richtung Differentialkolben 7 verlagert, wobei sie bei Überschreiten einer definierten Trägheitskraft, d. h. bei Überschreiten einer definierten Fahrzeugverzögerung an ihrem auf der kleineren Kolbenstirnfläche befindlichen Ventilsitz zur Anlage gelangt und dadurch eine zuvor offene, den Bremsdruckregler-Eingang 4 mit dem Bremsdruckregler-Ausgang 5 hydraulisch verbindende Längsbohrung 12 im Differentialkolben 7 verschließt.

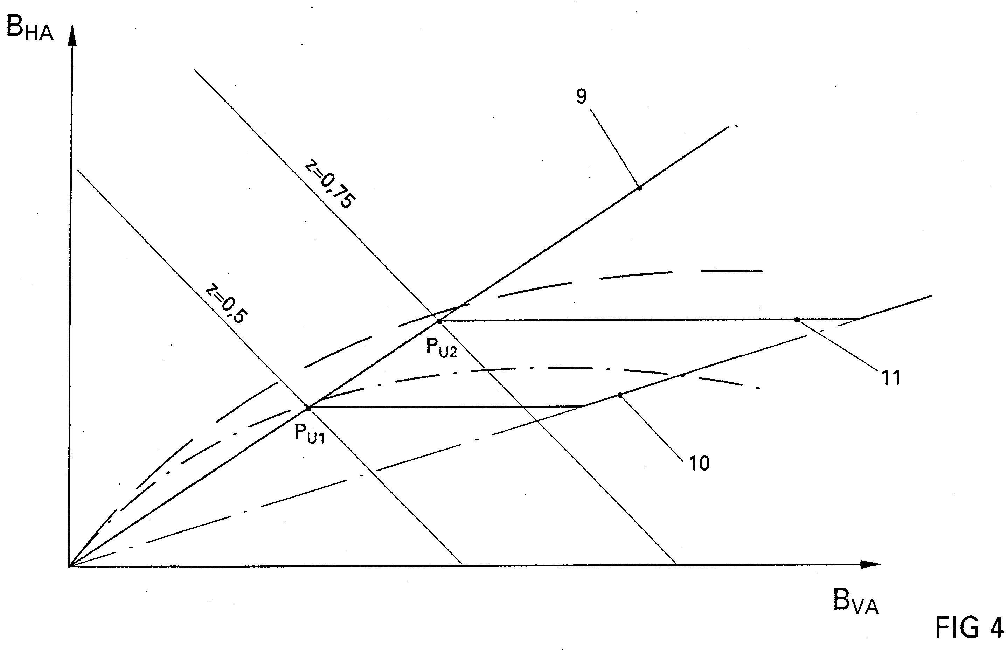

Durch dieses Verschließen der Längsbohrung 12 wird von einer zuvor vorliegenden festen Bremskraftverteilung Vorderachse/Hinterachse auf eine "geknickte Bremskraftverteilung" umgeschaltet, von wo ab der am Bremsdruckregler-Ausgang 5 herrschende Hydraulikdruck einem weiteren Anstieg des am Bremsdruckregler-Eingang 4 herrschenden Hydraulikdrucks entsprechend dem Verhältnis seiner beiden Kolbenstirnflächen nur noch teilweise, d. h. gemindert folgt. Im Kennlinienfeld gemäß Fig. 4 ist dieser durch die vorerwähnte definierte Trägheitskraft definierte Umschaltpunkt des Bremsdruckreglers mit $P_{u1}$ gekennzeich-net.

Vorgesehen sind nun weiterhin Mittel, die es ermöglichen, derart auf die kugelförmige Trägheitsmasse 2 Einfluß zu nehmen, daß diese gegebenenfalls, d. h. in Abhängigkeit von einem oder auch mehreren Betriebsparametern nicht schon bei der zuvor erwähnten definierten ersten Trägheitskraft die Längsbohrung verschließend auf ihrem Ventilsitz zur Anlage gelangt, d. h. den Bremsdruckregler nicht bereits im Umschaltpunkt $P_{u1}$ auf einen abgeknickten Kennlinienast umschaltet, sondern erst bei einer definierten höheren zweiten Trägheitskraft.

Vorgesehen sind elektro-magnetisch ein- und ausschaltbare Mittel, und zwar entweder entsprechend Fig. 1 und Fig. 2 in Form eines elektro-magnetisch antreibbaren Kolbens oder Stößels 6.1, der jeweils in die Bewegungsbahn der Trägheitsmasse 2 hineinschiebbar und wieder herausziehbar ist, oder aber entsprechend Fig. 3 in Form eines unmittelbar durch seine ein- und ausschaltbare Magnetkraft auf die dann aus einem ferromagnetischen Material bestehende Trägheitsmasse 2 einwirkenden Elektromagneten 6.2.

Im in Fig. 1 dargestellten Ausführungsbeispiel ist der elektro-magnetisch angetriebene Stößel 6.1 räumlich derart positioniert, daß sein in der Längsbohrung 12 des Differentialkolbens 7 axialverschieblich gelagerter Teil bei eingeschaltetem Stößelantrieb, d. h. bei stromdurchflossener Erregerwicklung 8 soweit in Richtung der kugelförmigen Trägheitsmasse 2, in der Zeichnung also nach rechts, verlagert wird, daß er in die Bewegungsbahn der Trägheitsmasse 2 hineinragt. Diese kann sich somit nur dann die Längsbohrung 12 verschließend an ihrem Ventilsitz anlegen, wenn ihre Trägheitskraft groß genug ist, nicht nur die Steigung ihrer Bewegungsbahn zu überwinden, sondern zusätzlich auch die ihr entgegenwirkende Stößeikraft des Stößels 6.1, deren Hohe durch die Höhe der magnetischen Kraft, d. h. letztlich von der Größe des die Erregerwicklung 8 durchfließenden Erregerstroms bestimmt ist.

Entsprechend der Größe der der Bewegung der kugelförmigen Trägheitsmasse 2 entgegengerichteten Stößelkraft wird die Trägheitsmasse somit erst bei einer größeren Fahrzeugverzögerung die Längsbohrung 12 verschließend an ihrem Ventilsitz zur Anlage gelangen, weil sie eben zusätzlich erst die Stößel-Gegenkraft überwinden muß. Der Ansprech- bzw. Umschaltpunkt des erfindungsgemäßen Bremsdruckreglers wird nach Aktivierung des elektro-magnetischen Antriebs des Stößels 6.1 somit nicht schon wie normalerweise bei einem Abbremsfaktor von zum Beispiel

$$z = 0,5 \left\{ z = \frac{\text{Verzögerung a}}{\text{Erdbeschleunigung g}} = \frac{\text{Bremskraft}}{\text{Gewichtskraft}} \right\},$$

4

sondern erst bei einem höheren Abbremsfaktor vom Kennlinienast der festen Bremskraftverteilung auf einen abgeknickten Kennlinienast umgeschaltet. In Fig. 4 wurde angenommen, daß die vom Stößel 6.1 aufgebrachte Gegenkraft so gewählt wurde, daß die kugelförmige Trägheitsmasse 2 erst bei einer bei einem Abbremsfaktor von z. B. z = 0,75 gegebenen höheren definierten zweiten Trägheitskraft an ihrem Ventilsitz zur Anlage gelangt, daß die Umschaltung des Bremsdruckreglers also erst z. B. bei einem Ansprech- bzw. Umschaltpunkt $P_{u2}$ stattfindet.

Im Ausführungsbeispiel gemäß Fig. 2 ist eine Variante des in Fig. 1 dargestellten umschaltbaren trägheitsgesteuerten Bremsdruckminderers dargestellt. Auch hier ist ein elektro-magnetisch antreibbarer Stößel 6.1 aus dauermagnetischem Material vorgesehen, der im nicht aktivierten Zustand - mit seinem in der Zeichnung unten liegenden Ende - am Polschuh 6.3 des Elektromagneten anliegt und in diesem Zustand die Bewegung der kugelförmigen Trägheitsmasse 2 zu ihrem Ventilsitz nicht behindert. Bei aktiviertem Elektromagneten, d. h. bei von einem Erregerstrom durchflossener Erregerwicklung 8 wird der Stößel 6.1 dagegen - wie in Fig. 2 dargestellt - so weit ins Gehäuseinnere hineinverlagert, daß er in die Bewegungsbahn der kugelförmigen Trägheitsmasse 2 hineinragt und deren Bewegung zum Ventilsitz behindert.

In diesem Ausführungsbeispiel wird der Stößel 6.1 nicht wie in Fig. 1 koaxial zur Längsbohrung des Bremsdruckreglers, sondern etwa radial dazu ins Gehäuseinnere verlagert.

Ob die eine oder die andere Anordnung die günstigere oder zweckmäßigere ist, hängt vom jeweiligen Einzelfall ab. In beiden Fällen kann jedoch über den elektro-magnetisch antreibbaren Stößel 6.1 eine der Bewegung der kugelförmigen Trägheitsmasse 2 zusätzlich entgegenwirkende Kraft aufgebracht werden, mit der der Ansprech- bzw. Umschaltpunkt des Bremsdruckreglers im Bedarfsfall definiert umgeschaltet, d. h. innerhalb des Kennlinienfelds verschoben werden kann.

Beim in Fig. 3 dargestellten Ausführungsbeispiel des erfindungsgemäßen umschaltbaren trägheitsgesteuerten Bremsdruckminderers ist ein in das Gehäuse 3 des Bremsdruckreglers hineinragender Elektromagnet 6.2 - z. b. durch Einpressen - druckdicht verbaut und räumlich derart positioniert, daß er bei eingeschaltetem Erregerstrom, d. h. bei stromdurchflossener Erregerwicklung 8 mit seiner Magnetkraft auf die in diesem Falle aus ferromagnetischem Material bestehende kugelförmige Trägheitsmasse 2 eine zusätzliche Kraft ausübt, die der Bewegung der kugelförmigen Trägheitsmasse zu ihrem am Differentialkolben 7 befindlichen Ventilsitz hin entgegenwirkt.

Ähnlich wie die in den Ausführungsbeispielen der Figuren 1 und 2 elektro-magnetisch aufgebrachten zusätzlichen (Stößel) Kräfte muß auch hier erst zusätzlich die Magnetkraft überwunden werden, ehe die kugelförmige Trägheitsmasse 2 bei entsprechend erhöhter Fahrzeugverzögerung die Längsbohrung 12 verschließend an ihrem Ventilsitz zur Anlage kommt.

In dem in Fig. 4 exemplarisch dargestellten Kennlinienfeld eines erfindungsgemäßen umschaltbaren trägheitsgesteuerten Bremsdruckminderers ist die Bremskraft $B_{HA}$ an der Hinterachse als Funktion der Bremskraft $B_{VA}$ an der Vorderachse aufgetragen, wobei strichpunktiert die bekannte ideale Bremskraftverteilung für das leere Kraftfahrzeug und gestrichelt die entsprechende ideale Bremskraftverteilung für das mit Vollast betriebene Kraftfahrzeug eingetragen sind.

Es wurde ein trägheitsgesteuerter, d. h. verzögerungsabhängiger Bremsdruckminderer des GP-Valve-Typs der Fa. Lucas angenommen. Dieser schaltet im Ausführungsbeispiel normalerweise, d. h. ohne zusätzliche äußere Steuereinflüsse bei einem Abbremsfaktor von nur beispielsweise z = 0,5 von einer mit 9 bezifferten festen Bremskraftverteilung auf einen mit 10 bezifferten abgeknickten Kennlinienast um. Der Ansprech- bzw. Umschaltpunkt ist wie bereits erwähnt mit $P_{u1}$ beziffert und konstruktiv derart festgelegt, daß er möglichst nahe, aber in jedem Falle noch unterhalb der strichpunktiert dargestellten Kennlinie der idealen Bremskraftverteilung für das leere Fahrzeug liegt, die Haftwertausnutzung des Fahrzeugs also im gesetzlich vorgegebenen Rahmen liegt.

Im übrigen wurde angenommen, daß die auf die Trägheitsmasse 2 zusätzlich einwirkenden elektromagnetisch ein- und ausschaltbaren Mittel, d. h. die Stößel 6.1 bzw. der Elektromagnet 6.2 bei ihrer Aktivierung jeweils mit einem Erregerstrom beaufschlagt wurden, der bewirkt, daß der erfindungsgemäße Bremsdruckregler nicht schon bei einer Abbremsung z = 0,5, sondern erst bei einem höheren Abbremsfaktor von z. B. z = 0,75, d. h. bei einem Ansprech- bzw. einem Umschaltpunkt $P_{u2}$ auf einen mit 11 bezifferten abgeknickten Kennlinienast des Kennlinienfelds umschaltet. Dieser Umschaltpunkt $P_{u2}$ ist im Ausführungsbeispiel so gewählt worden, daß er möglichst genau oder nur knapp unterhalb der gestrichelt dargestellten idealen Bremskraftverteilung bei Vollast liegt.

Der erfindungsgemäße umschaltbare trägheitsgesteuerte Bremsdruckregler kann in vielfältiger Weise mit großem Vorteil eingesetzt werden, z. B. insbesondere in blockiergeschützten, d. h. in mit einem Antiblockier-Regelsystem ausgestatteten hydraulischen Bremsanlagen.

In solchen Anlagen kann der erfindungsgemäße Bremsdruckregler in der Weise eingesetzt werden, daß er bei defektem Antiblockier-Regelsystem, d. h. im Betriebszustand "ABS - nicht i. O." als ganz normaler Bremsdruckminderer, d. h. ohne Erregung des elektro-magnetischen Antriebs des Stößels 6.1 bzw. ohne Erregung des Elektromagneten 6.2 betrieben wird, also derart, daß der Bremsdruckminderer bei erreichen eines Abbremsfaktors von etwa z = 0,5, also beim Umschaltpunkt $P_{u1}$ von einer festen Bremskraftverteilung auf den vorerwähnten abgeknickten Kennlinienast 10 umschaltet, dem am Bremsdruckregler-Auslaß 5 angeschlossenen Bremsleitungsabschnitt bei weiterer Steigerung des hydraulischen Eingangsdrucks also jeweils nur noch ein geminderter Hydraulikdruck zugeführt wird.

Bei nicht defektem Antiblockier-Regelsystem, d. h. im Betriebszustand "ABS ist i. O." kann dagegen bei Bremsbeginn, z. B. über den üblichen Bremslichtschalter, die elektro-magnetische Vorrichtung im Bremsdruckminderer aktiviert werden, d. h. den Erregerwicklungen 8 ein entsprechender Erregerstrom zugeführt werden, um dadurch den Ansprech- bzw. Umschaltpunkt des Bremsdruckminderers auf ein geeignetes höheres Niveau zu legen, z. B. auf den in Fig. 4 für eine Abbremsung von z. B. etwa z = 0,75 festgelegten Wert $P_{u2}$.

Dadurch, daß die Mindererfunktion des Bremsdruckminderers beim Betriebszustand "ABS ist i. O." nicht völlig ausgeschaltet wird, sondern der Umschaltpunkt lediglich vom ursprünglichen - konstruktiv vorgesehenen - Umschaltpunkt $P_{u1}$ auf einen höheren Umschaltpunkt $P_{u2}$ umgeschaltet wird, wird in vorteilhafter Weise nur vergleichsweise wenig Energie für die umschaltung des Bremsdruckminderers benötigt.

Im Vergleich zu sonst üblicherweise eingesetzten lastabhängigen Bremsdruckminderern oder -begrenzern stellt der erfindungsgemäße rein elektro-magnetisch umschaltbare trägheitsgesteuerte Bremsdruckregler ein vergleichsweise kleinbauendes kompaktes und preiswertes Bauelement dar, das bei einem Einsatz in blockiergeschützten hydraulischen Bremsanlagen mit quasi nur geringem Aufwand einerseits ohne spürbare Abstriche bezüglich des erreichbaren Bremsweges eine weitgehend volle Ausschöpfung der einem Antiblockier-Regelsystem eigenen Vorteile ermöglicht, andererseits aber auch bei defektem Antiblockier-Regelsystem für die erforderliche Fahr- bzw. Bremsstabilität des Fahrzeugs sorgt.

Es ist leicht erkennbar, daß beim erfindungsgemäßen umschaltbaren trägheitsgesteuerten Bremsdruckregler in einfachster Weise durch Steuerung des die Erregerwicklung 8 durchfließenden Erregerstroms der Umschaltpunkt des Bremsdruckreglers in vielfältiger Weise, d. h. in Abhängigkeit beliebiger Betriebsparameter beliebig verändert werden kann. So ist es z. B. natürlich auch möglich, den Umschaltpunkt u. a. lastabhängig zu verändern, indem der Erregerstrom der Erregerwicklung 8 z. B. lastabhängig gesteuert wird. In einfacher Weise wäre es so z. B. auch möglich, beim Bremsen in der Kurve den Umschaltpunkt des Bremsdruckreglers z. B. in Abhängigkeit von der Querbeschleunigung des Fahrzeugs zu beeinflussen.

Im übrigen ist es für die Erfindung ohne Bedeutung, welcher spezielle Typ von Bremsdruckregler zum Einsatz kommt und ob er vom Begrenzer- oder vom Minderertyp ist.

**BEZUGSZEICHENNLISTE**

| | |
|---|---|
| 1 | Bremsdruckregler, insbesondere Bremsdruckminderer |
| 2 | Trägheitsmasse |
| 3 | Reglergehäuse |
| 4 | Bremsdruckregler-Eingang |
| 5 | Bremsdruckregler-Ausgang |
| 6.1 | elektro-magnetisch angetriebener Stößel |
| 6.2 | Elektromagnet |
| 6.3 | Polschuh |
| 7 | Differentialkolben |
| 8 | Erregerwicklung des elektro-magnetischen Stößelantriebs |
| 9 | Kennlinienast "feste Bremskraftverteilung" |
| 10 | erster abgeknickter Kennlinienast "Bremskraftminderung" |
| 11 | zweiter abgeknickter Kennlinienast "Bremskraftminderung" |
| 12 | Längsbohrung im Differentialkolben |
| $P_{u1}$ | Bei einer ersten definierten Trägheitskraft sich ergebender Umschaltpunkt der Bremsdruckreglers |
| $P_{u2}$ | Bei einer höheren zweiten definierten Trägheitskraft sich ergebender Umschaltpunkt |

**Patentansprüche**

1. Umschaltbarer trägheitsgesteuerter Bremsdruckregler (1) für hydraulische Kraftfahrzeug-Bremsanlagen, mit einer vorzugsweise kugelförmigen Trägheitsmasse (2), durch deren beim Bremsen des Fahrzeugs trägheitsbedingte Verlagerung entlang einer vorzugsweise etwas ansteigenden Bewegungsbahn ein vom Bremsdruckregler-Eingang (4) zu einem Bremsdruckregler-Ausgang (5) führender Leitungsabschnitt bei Überschreiten einer definierten Trägheitskraft - direkt oder indirekt - unterbrechbar ist, wobei auf die Trägheitsmasse (2) zusätzlich einwirkende Mittel vorgesehen sind, die in Abhängigkeit von Betriebsparametern ein- und ausschaltbar sind,
   **dadurch gekennzeichnet,**
   daß die Mittel (6.1; 6.2) elektro-magnetisch ein- und ausschaltbar sind,
   und daß durch das Ein- oder durch das Ausschalten der Mittel (6.1; 6.2) die zum Unterbrechen des Leitungsabschnitts zu überwindende Trägheitskraft von einem definierten ersten Wert ($P_{u1}$) auf einen definierten höheren zweiten Wert ($P_{u2}$) umschaltbar ist.

2. Umschaltbarer trägheitsgesteuerter Bremsdruckregler (1) nach Anspruch 1,
   **dadurch gekennzeichnet,**
   daß die Mittel als elektro-magnetisch antreibbare Stößel (6.1) oder Kolben ausgebildet sind, die in die Bewegungsbahn der Trägheitsmasse (2) hineinschiebbar und wieder herausziehbar sind.

3. Umschaltbarer trägheitsgesteuerter Bremsdruckregler (1) nach Anspruch 1,
   **dadurch gekennzeichnet,**
   daß die Mittel als unmittelbar durch ihre ein- und ausschaltbare Magnetkraft auf die Trägheitsmasse (2) einwirkende Elektromagnete (6.2) ausgebildet sind.

4. Umschaltbarer trägheitsgesteuerter Bremsdruckregler (1) nach einem der Ansprüche 1 bis 3,
   **dadurch gekennzeichnet,**
   daß der Erregerstrom der elektro-magnetischen Elemente (Stößel 6.1; Elektromagnet 6.2) in Abhängigkeit von einem oder mehreren Betriebsparametern gesteuert ist, insbesondere in Abhängigkeit von der Fahrzeuglast, von der Radlast oder der Fahrzeugquerbeschleunigung.

FIG 1

FIG 2

FIG 3

FIG 4

EP 0 633 172 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 101 367 (D.B.A.)<br>* Seite 2, Zeile 23 - Seite 3, Zeile 28 *<br>* Seite 4, Zeile 22 - Zeile 28 *<br>* Seite 6, Zeile 13 - Zeile 16; Ansprüche 1,3; Abbildung 1 *<br>--- | 1,3,4 | B60T8/26<br>B60T8/24 |
| X | DE-A-41 00 825 (ALFRED TEVES)<br>* Spalte 1, Zeile 52 - Spalte 2, Zeile 65; Abbildung 1 *<br>--- | 1,2,4 | |
| X | PATENT ABSTRACTS OF JAPAN<br>vol. 12, no. 208 (M-709) (3055) 15. Juni 1988<br>& JP-A-63 011 468 (NIPPON AIR BRAKE CO.) 18. Januar 1988<br>* Zusammenfassung *<br>--- | 1,3,4 | |
| X | PATENT ABSTRACTS OF JAPAN<br>vol. 11, no. 14 (M-553) (2461) 14. Januar 1987<br>& JP-A-61 188 260 (NISSAN MOTOR CO.) 21. August 1986<br>* Zusammenfassung *<br>--- | 1,3,4 | RECHERCHIERTE SACHGEBIETE (Int.Cl.6)<br><br>B60T |
| A,D | DE-A-29 18 772 (ROBERT BOSCH)<br>* Zusammenfassung; Abbildungen 1,3 *<br>--- | 1,4 | |
| A,D | DE-A-15 55 435 (GIRLING)<br>* Seite 14, letzter Absatz - Seite 16, Absatz 2; Abbildung 7 *<br>--- | 1,4 | |
| A,D | DE-A-40 29 332 (ALFRED TEVES)<br>* das ganze Dokument *<br>--- | 1,2,4 | |
| A,D | DE-A-37 42 173 (ALFRED TEVES)<br>* das ganze Dokument *<br>--- | 1,4 | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 21. September 1994 | Meijs, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

..............................................................................
& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung

EP 94 10 5937

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-3 727 989 (KEADY) <br> * Zusammenfassung; Abbildungen * <br> --- | 1,2,4 | |
| A | FR-A-2 404 259 (GIRLING) <br> * das ganze Dokument * <br> --- | 1,2 | |
| A | EP-A-0 462 867 (BENDIX EUROPE) <br> * Spalte 2, Zeile 20 - Spalte 3, Zeile 30; Abbildung 1 * <br> ----- | 1 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 21. September 1994 | Meijs, P |

EPO FORM 1503 03.82 (P04C03)